# EUROPÄISCHE PATENTSCHRIFT

(11) **EP 1 708 316 B1**
(45) Veröffentlichungstag und Bekanntmachung des Hinweises auf die Patenterteilung: **20.04.2011**
(21) Anmeldenummer: 06101657.2
(22) Anmeldetag: 14.02.2006
(51) Int. Cl.: H01R 39/16, H02K 13/00

(54) **Verfahren zur Herstellung eines Ankers für eine elektrische Maschine**
Method for manufacturing an assembly consisting of commutator, axe and rotor of an electrical machine
Procédé pour fabriquer un assemblage comportant un commutateur, un axe et un roteur d'une machine électrique

(30) Priorität: 29.03.2005 DE 102005014092
(43) Veröffentlichungstag der Anmeldung: 04.10.2006
(73) Patentinhaber: ROBERT BOSCH GMBH, 70442 Stuttgart (DE)
(72) Erfinder: Schrittenlocher, Wolfgang, 76532 Baden-Baden (DE); Herp, Juergen, 77815 Buehl (DE); Schuetz, Juergen, 77866 Rheinau (DE)

(56) Entgegenhaltungen:
- DE-A1- 19 610 736
- US-A- 4 263 711
- US-A- 4 983 866
- US-A1- 2001 009 339
- US-A1- 2004 056 537

## Beschreibung

### Stand der Technik

Die vorliegende Erfindung betrifft ein Verfahren zur Herstellung eines Ankers für eine elektrische Maschine und insbesondere ein Verfahren zur Herstellung eines Ankers für einen Gleichstrom-Kleinmotor.

Elektrische Maschinen sind aus dem Stand der Technik in unterschiedlichen Ausgestaltungen bekannt. Bei der Herstellung werden bei Kommutator-Motoren gemäß einem bekannten Verfahren ein Blechpaket für den Anker auf eine Welle aufgeschoben und z.B. mittels einer Isolierhülse aus Papier oder Kunststoff isoliert. Anschließend werden die Kommutatoren auf die Ankerwelle aufgeschoben. Da die Kommutatoren auf die Ankerwelle aufgeschoben werden, muss die Kommutatorbohrung entsprechend genau hergestellt werden. Hieraus resultiert ein zusätzlicher Fertigungsaufwand bei der Kommutatorherstellung. Ferner können aufgrund von Toleranzabweichungen bei dem Aufschieben des Kommutators Risse oder Beschädigungen am Kommutator entstehen, so dass bei den heutigen Verfahren der Anteil von fehlerhaften Teilen relativ hoch ist. Weiterhin müssen auch die Bleche des Blechpakets an der Welle beispielsweise mittels Verstemmen befestigt werden. Die Kommutatoren werden an der Welle beispielsweise mittels Kleben befestigt. Somit sind im Stand der Technik eine Vielzahl von Herstellungsschritten notwendig, was die Herstellung derartiger Anker aufwendig und teuer macht.

Aus "US-A-4263711" ist ein Verfahren zur Herstellung eines Ankers bekannt, bei dem ein Blechpaket und ein Kommutator auf einer Welle mittels Spritzguß angebracht werden.

### Vorteile der Erfindung

Das erfindungsgemäße Verfahren zur Herstellung eines Ankers für eine elektrische Maschine mit den Merkmalen des Patentanspruchs 1 weist demgegenüber den Vorteil auf, dass der Anker einfach und schnell hergestellt werden kann. Hierbei ermöglicht das erfindungsgemäße Verfahren in einem Arbeitsschritt gleichzeitig eine Fixierung des Kommutators an der Welle und eine Isolation des Blechpakets. Gemäß der Erfindung kann die Anzahl der Arbeitsschritte deutlich reduziert werden, so dass sich kürzere Taktzeiten für die Herstellung des Ankers ergeben. Gemäß dem erfindungsgemäßen Verfahren wird in einem ersten Schritt ein Kommutatorrohling umfassend einen Kommutatorsegmentbereich und einen Seitenbereich hergestellt. Nachdem der Kommutatorrohling und das Blechpaket auf der Welle angeordnet wurden, wird eine Isolierung des Kommutatorrohlings von dem Blechpaket durch Einspritzen eines Kunststoffs in einem Spritzwerkzeug ausgeführt. Gleichzeitig mit der Isolierung werden der Kommutatorrohling und das Blechpaket an der Welle durch den Kunststoff fixiert. Somit kann erfindungsgemäß in einem Schritt eine Isolation zwischen Kommutator und Blechpaket erfolgen sowie gleichzeitig eine Fixierung dieser beiden Bauteile an der Welle. Anschließend wird der Kommutatorrohling fertig bearbeitet.

Die Unteransprüche haben bevorzugte Weiterbildungen der Erfindung zum Gegenstand.

Vorzugsweise weist der Kommutatorrohling einen Stützbereich für eine Abstützung des Kommutatorrohlings auf der Welle auf. Dadurch kann eine einfachere Positionierung vor dem Schritt des Kunststoffspritzgießens ermöglicht werden. Ferner ist eine verbesserte Fixierung des Kommutators auf der Welle möglich.

Besonders bevorzugt ist der Kommutatorrohling als tiefgezogene Hülse oder als fließgepresste Hülse oder aus einem flachen Bandmaterial, welches gerollt oder gebogen wird, hergestellt. Dadurch kann der Kommutatorrohling sehr kostengünstig hergestellt werden.

Gemäß einer weiteren bevorzugten Ausgestaltung der Erfindung wird der Kommutatorrohling und das Blechpaket auf der Welle positioniert und diese vormontierte Baugruppe wird in das Spritzwerkzeug eingelegt.

Gemäß einer anderen bevorzugten Ausgestaltung der Erfindung wird die aus Kommutatorrohling, Welle und Blechpaket bestehende Baugruppe erst beim Einlegen in das Spritzwerkzeug vormontiert. Hierbei wird vorzugsweise zuerst die Welle in eine Hälfte des Spritzwerkzeugs eingelegt und anschließend der Kommutatorrohling und das Blechpaket auf die Welle aufgeschoben.

Weiter bevorzugt wird zur Fixierung des Blechpakets und/oder des Kommutatorrohlings vor dem Schritt des Spritzgießens ein Hilfsträger verwendet. Dieser Hilfsträger wird vorzugsweise während des Spritzvorgangs mit umspritzt und verbleibt somit im hergestellten Anker.

Der Hilfsträger ist vorzugsweise aus einem Kunststoff hergestellt und insbesondere aus dem gleichen Kunststoff wie das Spritzmaterial zum Herstellen der Isolierung und zur Fixierung des Kommutatorrohlings und des Blechpakets.

Der Kommutatorrohling ist besonders bevorzugt aus einem Kupfermaterial hergestellt. Weiter bevorzugt ist ein Hilfsträger derart ausgebildet, dass er ein gerolltes Kommutatormaterial mittig zur Welle fixiert.

Durch das erfindungsgemäße Verfahren können somit Anker für elektrische Kommutatormaschinen deutlich einfacher und kostengünstiger hergestellt werden. Weiterhin ergeben sich Einsparungen beim Werkzeugbau und hinsichtlich der Investitionssummen zur Einrichtung von Fertigungsstraßen.

Ferner betrifft die Erfindung eine elektrische Maschine, insbesondere einen Gleichstrommotor, mit einem Anker, welcher gemäß dem erfindungsgemäßen Verfahren hergestellt wird.

### Zeichnung

Nachfolgend wird unter Bezugnahme auf die begleitende Zeichnung ein Ausführungsbeispiel der Erfindung beschrieben. In der Zeichnung ist:
- Figur 1: eine teilweise geschnittene Seitenansicht eines Kommutatorrohlings und einer Welle vor einem ersten Montageschritt,
- Figur 2: eine teilweise geschnittene Seitenansicht der Vormontage des Ankers,
- Figur 3: eine teilweise geschnittene Seitenansicht eines umspritzten Ankers, und
- Figur 4: eine teilweise geschnittene Seitenansicht eines fertiggestellten Ankers.

### Beschreibung des Ausführungsbeispiels

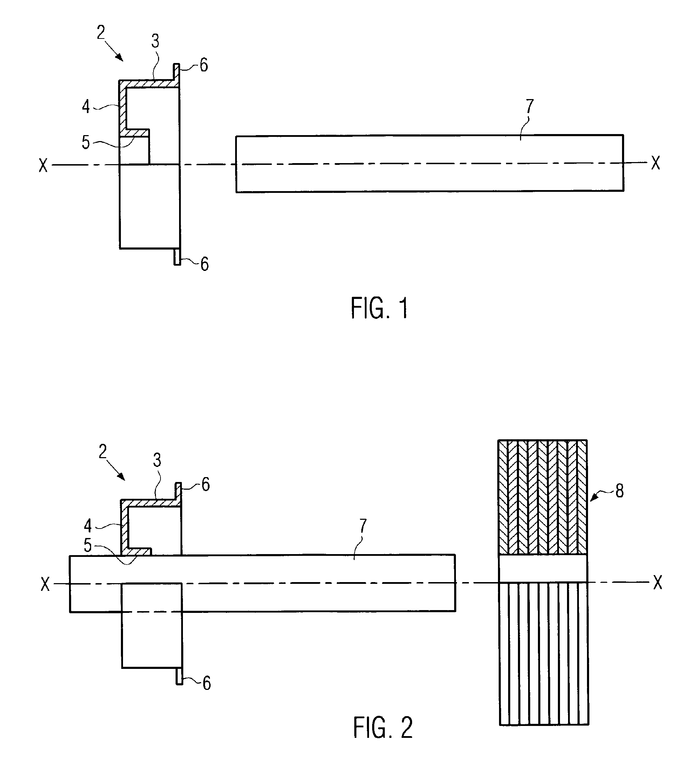

Nachfolgend wird unter Bezugnahme auf die Figuren 1 bis 4 ein erfindungsgemäßes Verfahren zur Herstellung eines Ankers beschrieben.

Die Figuren 1 bis 4 zeigen dabei jeweils im oberen Bereich entlang einer Mittelachse X-X eine geschnittene Darstellung der Bauteile.

Zur Herstellung des Ankers 1 wird in einem ersten Schritt ein Kommutatorrohling 2 hergestellt. Der Kommutatorrohling 2 ist aus einem Kupfermaterial hergestellt und kann aus einem Bandmaterial gerollt oder gebogen werden oder als tiefgezogene oder fließgepresste Kupferhülse hergestellt werden. Der Kommutatorrohling 2 weist im Wesentlichen eine ringförmige Form auf und umfasst einen Kommutatorsegmentbereich 3, einen Seitenbereich 4, einen Abstützbereich 5 für eine Abstützung an einer Ankerwelle 7 und eine Vielzahl von Haken 6, welche an einem Ende des Kommutatorrohlings 2 angeordnet sind und nach außen gerichtet sind.

Wie aus Figur 1 ersichtlich ist, wird der Kommutatorrohling 2 auf die Welle 7 aufgeschoben. Der Abstützbereich 5 stützt dabei den Kommutatorrohling auf der Welle 7 ab, wie in Figur 2 gezeigt. Anschließend wird ein Blechpaket 8 auf die Welle 7 von der anderen Seite aufgeschoben. Das Blechpaket 8 besteht aus einer Vielzahl von flachen, ringförmigen Scheiben. Hierbei ist keine Isolationslamelle o.Ä. vorgesehen, so dass alle Scheiben des Blechpakets gleich ausgebildet sein können.

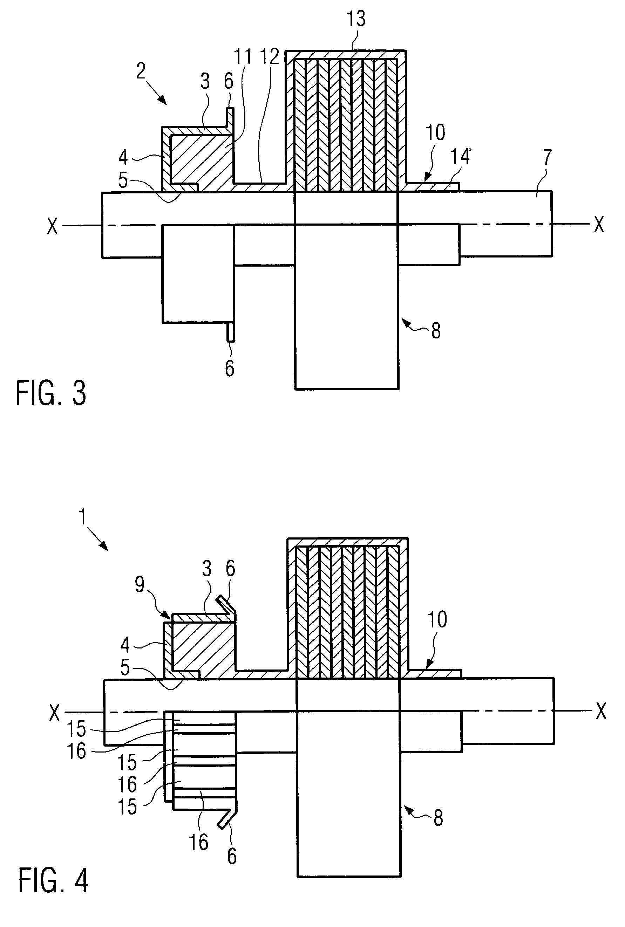

Nachdem der Kommutatorrohling 2 und das Blechpaket 8 auf der Welle 7 positioniert wurden, wird das derart vormontierte Bauteil in ein nicht gezeigtes Spritzwerkzeug gelegt. Anschließend erfolgt eine Einspritzung von Kunststoff, so dass nach dem Aushärten des Kunststoffs ein wie in Figur 3 gezeigter Ankerrohling entnommen werden kann. In Figur 3 ist der im Spritzschritt eingespritzte Kunststoff dabei mit dem Bezugszeichen 10 bezeichnet.

Genauer, wie aus Figur 3 ersichtlich ist, umfasst der eingespritzte Kunststoff 10 einen Füllbereich 11, welcher innerhalb des Kommutatorrohlings 2 liegt. Weiterhin ist ein aus Kunststoff hergestellter Isolierbereich 12 zwischen dem Kommutatorrohling 2 und dem Blechpaket 8 ausgebildet. Das Blechpaket 8 ist durch einen Gehäusebereich 13 aus Kunststoff umgeben und am Bereich der Welle 7 mittels eines Fixierbereichs 14 aus Kunststoff an der Welle 7 fixiert. Somit wird erfindungsgemäß in einem Spritzgussschritt eine Isolation des Kommutators vom Blechpaket und eine Fixierung des Kommutators und des Blechpakets an der Welle 7 erreicht.

Wie in Figur 4 gezeigt, wird in einem letzten Schritt der Kommutator fertiggestellt, wobei ein Eckbereich 9 zwischen dem Kommutatorsegmentbereich 3 und dem Seitenbereich 4 beispielsweise mittels Drehen entfernt wird. Dadurch sind der Kommutatorsegmentbereich 3 und der Seitenbereich 4 elektrisch voneinander getrennt. Ferner werden einzelne Kommutatorsegmente 15 durch Sägen von Schlitzen 16 elektrisch voneinander getrennt. Weiterhin werden die Haken 6 noch um ca. 45° umgebogen, so dass der Kommutator fertiggestellt ist.

Der in Figur 4 gezeigte Anker 1 kann somit anschließend mit Wicklungen in üblicher Weise versehen werden und in eine elektrische Maschine eingebaut werden.

Im Vergleich mit den bekannten Verfahren kann erfindungsgemäß somit eine einfache Montage des aus einer Vielzahl von Lamellen bestehenden Blechpakets 8 an der Welle erfolgen und eine Montage bzw. Befestigung des Kommutators an der Welle kann ebenfalls leicht erfolgen. Ferner sind keine Isolamellen oder ein zusätzliches Isolationsmaterial notwendig, da dies erfindungsgemäß durch den Spritzgussschritt erreicht werden kann. Weiterhin können der Kommutatorrohling bzw. die Lamellen des Blechpakets 8 kostengünstiger hergestellt werden, da die notwendigen Öffnungen für die Aufnahme der Welle große Toleranzen aufweisen können. Die Fixierung des Kommutators und des Blechpakets auf der Welle erfolgt ebenfalls durch den Schritt des Kunststoffspritzens. Die Kunststoffe für das Spritzgießen sind vorzugsweise Duroplaste.

## Patentansprüche

1. Verfahren zur Herstellung eines Ankers (1) für eine elektrische Maschine, wobei der Anker (1) eine Welle (7), ein auf der Welle angeordnetes Blechpaket (8) und einen Kommutator mit einer Vielzahl von Kommutatorsegmenten (15) aufweist, umfassend die Schritte:
- Herstellen eines Kommutatorrohlings (2) mit einem Kommutatorsegmentbereich (3) und einem Seitenbereich (4),
- Anordnen des Kommutatorrohlings (2) und des Blechpakets (8) auf der Welle (7),
- Fixieren des Kommutatorrohlings (2) und des Blechpakets (8) auf der Welle und Isolieren des Kommutatorrohlings (2) von dem Blechpaket (8), indem Kunststoff (10) in ein Spritzwerkzeug eingespritzt wird und als Fixiermittel sowie Isoliermittel dient;
- Fertigstellen des Kommutators durch Herstellen von Schlitzen (16), so dass einzelne Kommutatorsegmente (15) entstehen, sowie durch Trennen einer Verbindung zwischen dem Kommutatorsegmentbereich (3) und dem Seitenbereich (4).

2. Verfahren nach Anspruch 1, **dadurch gekennzeichnet, dass** der Kommutatorrohling (2) einen Abstützbereich (5) zum Abstützen des Kommutatorrohlings auf der Welle (7) aufweist.

3. Verfahren nach einem der vorhergehenden Ansprüche, **dadurch gekennzeichnet, dass** der Kommutatorrohling (2) als tiefgezogene Hülse hergestellt wird oder als fließgepresste Hülse hergestellt wird oder aus einem Bandmaterial gerollt oder gebogen wird.

4. Verfahren nach einem der vorhergehenden Ansprüche, **dadurch gekennzeichnet, dass** der Kommutatorrohling (2) und das Blechpaket (8) auf der Welle (7) positioniert werden und anschließend die so hergestellte Baugruppe in das Spritzwerkzeug für den Spritzvorgang eingelegt wird.

5. Verfahren nach einem der Ansprüche 1 bis 3, **dadurch gekennzeichnet, dass** der Kommutatorrohling (2), das Blechpaket (8) und die Welle (7) einzeln in das Spritzwerkzeug eingelegt werden und während des Einlegevorgangs der Kommutatorrohling (2) und das Blechpaket (8) auf der Welle (7) positioniert werden.

6. Verfahren nach Anspruch 5**, dadurch gekennzeichnet, dass** zuerst die Welle in das Spritzwerkzeug eingelegt wird und anschließend der Kommutatorrohling und das Blechpaket auf der Welle positioniert werden.

7. Verfahren nach einem der vorhergehenden Ansprüche, **dadurch gekennzeichnet, dass** zur Positionierung des Blechpakets (8) auf der Welle und/oder zur Positionierung des Kommutatorrohlings (2) auf der Welle ein Hilfsträger verwendet wird.

8. Verfahren nach Anspruch 7, **dadurch gekennzeichnet, dass** der Hilfsträger während des Spritzvorgangs mit Kunststoff umspritzt wird und im Anker (1) verbleibt.

9. Verfahren nach Anspruch 7 oder 8, **dadurch gekennzeichnet, dass** der Hilfsträger aus einem Kunststoffmaterial, insbesondere aus dem gleichen Kunststoffmaterial wie das Material zum Kunststoffspritzen, hergestellt wird.

10. Elektrische Maschine, umfassend einen Anker (1), welcher nach einem Verfahren gemäß einem der vorhergehenden Ansprüche hergestellt wurde.

## Claims

1. Method for producing an armature (1) for an electrical machine, the armature (1) having a shaft (7), a laminated core (8), arranged on the shaft, and a commutator with a multiplicity of commutator segments (15), comprising the steps of:
- producing a commutator blank (2) with a commutator segment region (3) and a side region (4),
- arranging the commutator blank (2) and the laminated core (8) on the shaft (7),
- fixing the commutator blank (2) and the laminated core (8) on the shaft and insulating the commutator blank (2) from the laminated core (8) by plastic (10) being injected into an injection mould and serving as a fixing means and insulating means;
- completing the commutator by producing slots (16), so that individual commutator segments (15) are created, as well as by separating a connection between the commutator segment region (3) and the side region (4).

2. Method according to Claim 1, **characterized in that** the commutator blank (2) has a supporting region (5) for supporting the commutator blank on the shaft (7).

3. Method according to one of the preceding claims, **characterized in that** the commutator blank (2) is produced as a deep-drawn sleeve or as an extruded sleeve or is rolled or bent from a sheet material.

4. Method according to one of the preceding claims, **characterized in that** the commutator blank (2) and the laminated core (8) are positioned on the shaft (7) and the assembly produced in this way is subsequently placed in the injection mould for the injection-moulding operation.

5. Method according to one of Claims 1 to 3, **characterized in that** the commutator blank (2), the laminated core (8) and the shaft (7) are placed individually in the injection mould and, during the placing operation, the commutator blank (2) and the laminated core (8) are positioned on the shaft (7).

6. Method according to Claim 5, **characterized in that** first the shaft is placed in the injection mould and then the commutator blank and the laminated core are positioned on the shaft.

7. Method according to one of the preceding claims, **characterized in that** an auxiliary support is used for the positioning of the laminated core (8) on the shaft and/or for the positioning of the commutator blank (2) on the shaft.

8. Method according to Claim 7, **characterized in that** the auxiliary support is encapsulated with plastic during the injection-moulding operation and remains in the armature (1).

9. Method according to Claim 7 or 8, **characterized in that** the auxiliary support is produced from a plastics material, in particular from the same plastics material as the material for injecting the plastic.

10. Electrical machine, comprising an armature (1), which has been produced by a method according to one of the preceding claims.

## Revendications

1. Procédé de fabrication d'une armature (1) pour une machine électrique, l'armature (1) présentant un arbre (7), un paquet de tôles (8) disposé sur l'arbre et un commutateur avec une pluralité de segments de commutateur (15), comprenant les étapes consistant à :
- fabriquer une pièce brute de commutateur (2) avec une région de segments de commutateur (3) et une région latérale (4),
- disposer la pièce brute de commutateur (2) et le paquet de tôles (8) sur l'arbre (7),
- fixer la pièce brute de commutateur (2) et le paquet de tôles (8) sur l'arbre et isoler la pièce brute de commutateur (2) du paquet de tôles (8), en injectant du plastique (10) dans un outil d'injection et en l'utilisant comme agent fixatif et agent isolant ;
- finir le commutateur en produisant des fentes (16), de sorte que des segments de commutateur individuels (15) se forment, et en séparant une connexion entre la région de segments de commutateur (3) et la région latérale (4).

2. Procédé selon la revendication 1, **caractérisé en ce que** la pièce brute de commutateur (2) présente une région de support (5) pour supporter la pièce brute de commutateur sur l'arbre (7).

3. Procédé selon l'une quelconque des revendications précédentes, **caractérisé en ce que** la pièce brute de commutateur (2) est réalisée sous forme de douille emboutie profond, ou est réalisée sous forme de douille extrudée filée, ou est laminée ou cintrée à partir d'un matériau en bande.

4. Procédé selon l'une quelconque des revendications précédentes, **caractérisé en ce que** la pièce brute de commutateur (2) et le paquet de tôles (8) sont positionnés sur l'arbre (7) et le module ainsi créé est ensuite introduit dans l'outil d'injection en vue de l'opération d'injection.

5. Procédé selon l'une quelconque des revendications 1 à 3, **caractérisé en ce que** la pièce brute de commutateur (2), le paquet de tôles (8) et l'arbre (7) sont introduits individuellement dans l'outil d'injection et pendant l'opération d'insertion, la pièce brute de commutateur (2) et le paquet de tôles (8) sont positionnés sur l'arbre (7).

6. Procédé selon la revendication 5, **caractérisé en ce que** l'arbre est tout d'abord introduit dans l'outil d'injection et la pièce brute de commutateur et le paquet de tôles sont ensuite positionnés sur l'arbre.

7. Procédé selon l'une quelconque des revendications précédentes, **caractérisé en ce que** pour le positionnement du paquet de tôles (8) sur l'arbre et/ou pour le positionnement de la pièce brute de commutateur (2) sur l'arbre, on utilise un support auxiliaire.

8. Procédé selon la revendication 7, **caractérisé en ce que** le support auxiliaire est surmoulé avec du plastique pendant l'opération d'injection et reste dans l'armature (1).

9. Procédé selon la revendication 7 ou 8, **caractérisé en ce que** le support auxiliaire est fabriqué à partir d'un matériau plastique, en particulier avec le même matériau plastique que le matériau pour l'injection de plastique.

10. Machine électrique, comprenant une armature (1), qui a été fabriquée conformément à un procédé selon l'une quelconque des revendications précédentes.
